(19) Europäisches Patentamt
European Patent Office
Office européen des brevets

(11) **EP 4 421 465 A1**

(12) **EUROPÄISCHE PATENTANMELDUNG**

(43) Veröffentlichungstag:
**28.08.2024 Patentblatt 2024/35**

(21) Anmeldenummer: **24159418.3**

(22) Anmeldetag: **23.02.2024**

(51) Internationale Patentklassifikation (IPC):
**G01K 17/20** *(2006.01)*

(52) Gemeinsame Patentklassifikation (CPC):
**G01K 17/20**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **23.02.2023 DE 102023104465**

(71) Anmelder: **Deutsches Zentrum für Luft- und Raumfahrt e.V.**
**53227 Bonn (DE)**

(72) Erfinder:
• **Patel, Dhruvkumar**
**50823 Köln (DE)**
• **Röger, Marc**
**74182 Obersulm (DE)**
• **Schmiedt, Jacob Estevam**
**53359 Rheinbach (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **VERFAHREN ZUR BESTIMMUNG VON WÄRMEDURCHGANGSKOEFFIZIENTEN UND WÄRMEKAPAZITÄTEN EINER GEBÄUDEHÜLLE**

(57)     Verfahren zur Bestimmung des Wärmedurchgangskoeffizienten und der Wärmekapazität einer Gebäudehülle umfassend die folgenden Schritte: Ermittlung mindestens einer Umgebungsbedingung auf einer Innen- und/oder einer Außenseite der Gebäudehülle zu mindestens zwei unterschiedlichen Zeitpunkten $t_i$, insbesondere der Lufttemperatur auf der Außenseite der Gebäudehülle zu mindestens zwei unterschiedlichen Zeitpunkten $t_i$; Erfassen eines Wärmebildes von zumindest einem vorgegebenen Anteil einer Außenseite der Gebäudehülle zu mindestens zwei unterschiedlichen Zeitpunkten $t_i$; und Ermitteln der Oberflächentemperatur des Anteils der Außenseite der Gebäudehülle zu mindestens zwei unterschiedlichen Zeitpunkten $t_i$ anhand des Wärmebildes; Bereitstellen eines Modells der Gebäudehülle zur Ermittlung des Wärmedurchgangskoeffizienten und der Wärmekapazität der Gebäudehülle; Kalibrierung des Modells anhand der ermittelten mindestens einen Umgebungsbedingung auf der Innen- und/oder der Außenseite der Gebäudehülle und der ermittelten Oberflächentemperatur des Anteils der Außenseite der Gebäudehülle; Ermittlung des Wärmedurchgangskoeffizienten und der Wärmekapazität der Gebäudehülle anhand des kalibrierten Modells.

```
Ermittlung mindestens einer Umgebungsbedingung
auf einer Innen- und/oder einer Außenseite
der Gebäudehülle zu mindestens zwei unterschiedlichen
Zeitpunkten t_i , insbesondere der
Lufttemperatur auf der Außenseite der
Gebäudehülle zu mindestens zwei unterschiedlichen
Zeitpunkten t_i;                                          — S01

Erfassen eines Wärmebildes von zumindest einem
vordefinierten Anteil einer Außenseite
der Gebäudehülle zu mindestens zwei unterschiedlichen
Zeitpunkten t_i; und                                      — S02

Ermitteln der Oberflächentemperatur des Anteils der
Gebäudehülle zu mindestens zwei unterschiedlichen
Zeitpunkten t_i anhand des Wärmebildes;                   — S03

Bereitstellen eines Modells der Gebäudehülle zur
Ermittlung des Wärmedurchgangskoeffizienten
und der Wärmekapazität der Gebäudehülle;                  — S04

Kalibrierung des Modells anhand der ermittelten
mindestens einen Umgebungsbedingung auf der
Innen- und/oder der Außenseite der Gebäudehülle und
der ermittelten Oberflächentemperatur des Anteils
der Außenseite der Gebäudehülle;                          — S05

Ermittlung des Wärmedurchgangskoeffizienten und
der Wärmekapazität der Gebäudehülle anhand
des kalibrierten Modells.                                 — S06
```

Fig. 1

EP 4 421 465 A1

**Beschreibung**

Die vorliegende Erfindung betrifft ein Verfahren zur Bestimmung des Wärmedurchgangskoeffizienten einer Gebäudehülle und eine Vorrichtung zur Bestimmung des Wärmedurchgangskoeffizienten einer Gebäudehülle.

Im Allgemeinen gibt es drei Hauptfaktoren, die die Gesamtenergieeffizienz eines Gebäudes bestimmen. Diese umfassen das Verhalten der Nutzenden, die Effizienz der Gebäudetechnik und die thermophysikalischen Eigenschaften der Gebäudehülle. Ein wesentlicher Indikator für den letztgenannten Faktor ist der Wärmedurchgangskoeffizient, der als Wärmestrom durch ein Hüllenelement bei einer Temperaturdifferenz von einem Grad Kelvin zwischen der Innen- und der Außenlufttemperatur angegeben wird. Hierbei können insbesondere die Planungswerte, die auf Angaben von Baustoffherstellern beruhen und die an realen Gebäuden gemessenen Wärmedurchgangskoeffizienten erheblich voneinander abweichen. Hinzu kommt, dass für viele alte Gebäude benötigte Auslegungswerte nicht bekannt sind.

Um die Lücke zwischen Simulation und realem Energieverbrauch zu schließen und um beispielsweise eine solide Grundlage für Entscheidungen über mögliche Sanierungsoptionen zu schaffen, sind daher schnelle und genaue Verfahren sowie Messmethoden erforderlich, um die tatsächlichen Wärmedurchgangskoeffizienten von Gebäudehüllen zu ermitteln.

Darüber hinaus ist die Wärmekapazität von Gebäudehüllen eine weitere bauphysikalische Größe, deren Ermittlung und entsprechende Kenntnis relevant ist, weil sie die Energiebilanz eines Gebäudes und den Komfort der Nutzenden beeinflusst.

Bekannte Methoden zur Bestimmung des Wärmedurchgangskoeffizienten beruhen auf der Mittelwertbildung von Messzeitreihen zur Annäherung an stationäre Bedingungen und erfordern daher relativ lange Messzeiten von mehreren Tagen.

Eine solche bekannte Methode ist die Wärmestrommessmethode, bei der Lufttemperatursensoren und Wärmestrommesser verwendet werden, die am Gebäudeelement angebracht sind. Über eine Messdauer von mehreren Tagen und eine Mittelung der Messwerte wird hier ein stationärer Wärmefluss approximiert und der Wärmedurchgangskoeffizient anhand des Quotienten aus dem gemittelten Wärmefluss und der Differenz der Lufttemperaturen auf der Außen- und Innenseite der Gebäudehülle ermittelt.

Ferner sind thermographische Methoden bekannt, die Infrarot (IR)-Kameras zur Erfassung eines Wärmebildes der Gebäudehülle verwenden, wobei ein ähnliches Mittelungsverfahren verwendet wird. IR-Kameras erfassen größere Bereiche und können Inhomogenitäten erkennen, haben aber sehr hohe Anforderungen an nahezu konstante Umgebungsbedingungen, sodass die Messungen in der Regel mehrfach wiederholt werden müssen. Die zugehörige ISO-Norm fordert daher auch, dass solche Messungen nur mit im Gebäudeinnern angeordneten IR-Kameras durchgeführt werden.

Die Kalibrierung vereinfachter, physikalisch motivierter Modelle ist eine weitere bekannte Methode. Dieser stützt sich nicht auf die Annahme eines stationären Zustands und kann daher eine höhere Genauigkeit und/oder kürzere Messzeiten als die oben genannten Methoden erreichen. Da die Modelle hierbei das dynamische Verhalten der Gebäudehülle erfassen, ist die Modellkalibrierung auch in der Lage, Wärmekapazitäten der Gebäudehülle zu liefern. Bekannte Methoden verwenden beispielsweise gemessene Energieverbrauchs- und Wetterdaten, um einen integralen Gesamtwärmeübergangskoeffizienten für die komplette Gebäudehülle zu bestimmen. Andere bekannte Methoden verwenden Wärmestrommessdaten, um den lokalen Wärmedurchgangskoeffizienten oder den Wärmewiderstand an der jeweiligen Messstelle zu ermitteln.

Die bei der obigen Wärmestrommethode wie auch den vorstehend genannten lokalen Modellkalibrierungsansätzen verwendeten Wärmeflusssensoren erfassen jedoch nur den Wärmestrom durch einen kleinen Bereich der Gebäudehüllen. Daher werden keine Heterogenitäten erkannt. Besagte Wärmestrommethoden erfordern außerdem die Installation von Messgeräten innerhalb des Gebäudes, was zu einer Beeinflussung der Nutzung des Gebäudes während der Messung führt.

Die oben genannten thermographischen Methoden haben sehr hohe Anforderungen an nahezu konstante Umgebungsbedingungen, weshalb sie gemäß ISO-Norm nur mit Kameras eingesetzt werden können, die auf der Innenseite des Gebäudes aufgestellt sind, da hier zumindest die Lufttemperatur als relativ konstant vorausgesetzt werden kann. Jedoch stellt dies wiederum eine deutliche Beeinflussung der Nutzung des Gebäudes dar.

Die oben genannten Modellkalibrierungsansätze auf Basis von Energieverbrauchsdaten, können nur integrale Wärmedurchgangskoeffizienten bestimmen und geben keine Information über die örtliche Variation des Wärmedurchgangskoeffizienten. Außerdem stellt die Nutzung von Energieverbrauchsdaten große datenschutzrechtliche Anforderungen und erschwert damit die Nutzung der Energieverbrauchsdaten.

Aufgabe der vorliegenden Erfindung ist es ein Verfahren und eine Vorrichtung zur zu schaffen, welche die obigen Nachteile des Standes der Technik überwinden und eine schnelle, berührungslose und/oder ortsaufgelöste Bestimmung des Wärmedurchgangskoeffizienten und der Wärmekapazität einer Gebäudehülle unter Berücksichtigung dynamischer Veränderungen der Umgebungsbedingungen sowie etwaiger Inhomogenitäten bzw. Heterogenitäten der Gebäudehülle erlauben.

Die Aufgabe wird gelöst durch ein Verfahren gemäß Anspruch 1 sowie eine Vorrichtung gemäß Anspruch 15.

Das erfindungsgemäße Verfahren zur Bestimmung des Wärmedurchgangskoeffizienten und der Wärmekapazität einer Gebäudehülle umfasst folgende Schritte:

a) Ermittlung mindestens einer Umgebungsbedingung auf einer Innen- und/oder einer Außenseite der Gebäudehülle zu mindestens zwei unterschiedlichen Zeitpunkten $t_i$, insbesondere der Lufttemperatur auf der Außenseite der Gebäudehülle zu mindestens zwei unterschiedlichen Zeitpunkten $t_i$;

b) Erfassen eines Wärmebildes von zumindest einem vorgegebenen Anteil einer Außenseite der Gebäudehülle zu mindestens zwei unterschiedlichen Zeitpunkten $t_i$; und

c) Ermitteln der Oberflächentemperatur des Anteils der Außenseite der Gebäudehülle zu mindestens zwei unterschiedlichen Zeitpunkten $t_i$ anhand des Wärmebildes;

d) Bereitstellen eines Modells der Gebäudehülle zur Ermittlung des Wärmedurchgangskoeffizienten und der Wärmekapazität der Gebäudehülle;

e) Kalibrierung des Modells anhand der ermittelten mindestens einen Umgebungsbedingung auf der Innen- und/oder der Außenseite der Gebäudehülle und der ermittelten Oberflächentemperatur des Anteils der Außenseite der Gebäudehülle;

f) Ermittlung des Wärmedurchgangskoeffizienten und der Wärmekapazität der Gebäudehülle anhand des kalibrierten Modells.

Dabei umfasst die mindestens eine Umgebungsbedingung auf einer Innen- und/oder einer Außenseite der Gebäudehülle insbesondere eine physikalische Größe, die im Zusammenhang mit Prozessen zur Wärmeübertragung bzw. mit Mechanismen zur Übertragung von thermischer Energie auf die Gebäudehülle steht. Beispielsweise handelt es sich bei der mindestens einen Umgebungsbedingung um die Lufttemperatur auf der Außenseite der Gebäudehülle und bei dem Prozess zur Wärmeübertragung auf die Gebäudehülle um einen konvektiven Wärmeaustausch zwischen der Gebäudehülle und der Luft auf der Außenseite der Gebäudehülle. Insbesondere erfolgt die Erfassung des Wärmebilds und/oder die Ermittlung mindestens einer Umgebungsbedingung berührungslos.

Alternativ oder zusätzlich hierzu handelt es sich bei der mindestens einen Umgebungsbedingung um die Lufttemperatur auf der Innenseite der Gebäudehülle und bei dem Prozess zur Wärmeübertragung auf die Gebäudehülle um einen konvektiven Wärmeaustausch zwischen der Gebäudehülle und der Luft auf der Innenseite der Gebäudehülle.

Alternativ oder zusätzlich hierzu handelt es sich bei der mindestens einen Umgebungsbedingung um die Windgeschwindigkeit in der Nähe eines vorgegebenen Anteils der Außenseite der Gebäudehülle bzw. deren äußerer Oberfläche und bei dem Prozess zur Wärmeübertragung auf die Gebäudehülle um einen konvektiven Wärmeaustausch zwischen der Gebäudehülle und der Luft auf der Außenseite der Gebäudehülle bzw. um einen konvektiven Wärmeübergang zwischen der Gebäudehülle und der Luft auf der Außenseite der Gebäudehülle.

Alternativ oder zusätzlich hierzu handelt es sich bei der mindestens einen Umgebungsbedingung um die Oberflächentemperaturen, insbesondere um das gewichtete Mittel, insbesondere um die gewichteten und gemittelten vierten Potenzen über die Oberflächentemperaturen der die Wand umgebenden Objekte auf der Innen- und/oder Außenseite der Gebäudehülle und bei dem Prozess zur Wärmeübertragung auf die Gebäudehülle um einen Austausch langwelliger Wärmestrahlung zwischen der Gebäudehülle und den die Gebäudehülle auf der Innen- und/oder Außenseite umgebenden Objekten.

Alternativ oder zusätzlich hierzu handelt es sich bei der mindestens einen Umgebungsbedingung um die von der Sonne emittierte kurzwellige Wärmestrahlung und bei dem Prozess zur Wärmeübertragung auf die Gebäudehülle um die Absorption der kurzwelligen Sonnenstrahlung durch die Gebäudehülle.

Hierdurch werden solche Wärmeübertragungs- bzw. Wärmetransportvorgänge, die die Temperatur der Gebäudehülle beeinflussen können bei der Ermittlung des Wärmedurchgangskoeffizienten und der Wärmekapazität der Gebäudehülle berücksichtigt. Hierdurch kann die Genauigkeit des Verfahrens verbessert werden. Ferner wird zu mindestens zwei unterschiedlichen Zeitpunkten $t_i$ ein Wärmebild zumindest eines vorgegebenen Anteils einer Außenseite der Gebäudehülle erfasst und die Oberflächentemperatur des Anteils der Außenseite der Gebäudehülle zu den zwei verschiedenen Zeitpunkten $t_i$ anhand des Wärmebildes ermittelt.

Darüber hinaus wird ein Modell der Gebäudehülle zur Ermittlung des Wärmedurchgangskoeffizienten und der Wärmekapazität der Gebäudehülle bereitgestellt. Insbesondere handelt es sich bei dem Modell um ein vereinfachtes, physikalisch motiviertes bzw. physikalisch informiertes Modell der Gebäudehülle. Anhand der ermittelten mindestens einen Umgebungsbedingung auf der Innen- und/oder der Außenseite der Gebäudehülle und der ermittelten Oberflächentemperatur des Anteils der Außenseite der Gebäudehülle wird das Modell sodann kalibriert. Hierdurch findet eine Anpassung oder Eichung des Modells statt, so dass die Abweichung zwischen einer vom Modell ermittelten Oberflächentemperatur des Anteils der Außenseite der Gebäudehülle unter der ermittelten mindestens einen Umgebungsbedingung und der aus dem Wärmebild ermittelten Oberflächentemperatur des vorgegebenen Anteils der Außenseite der Gebäudehülle möglichst gering ist, insbesondere minimal ist.

Anhand des kalibrierten Modells wird sodann der Wärmedurchgangskoeffizient und die Wärmekapazität der Gebäudehülle ermittelt. Hierdurch erfolgt eine schnelle und ortsaufgelöste Bestimmung des Wärmedurchgangskoeffizienten mit verbesserter Genauigkeit unter Berücksichtigung dynamischer Veränderungen der Gebäudehülle und/oder seiner Umgebung sowie eine genaue und schnelle Ermittlung der Wärmekapazität der Gebäudehülle.

Vorzugsweise erfolgt die Ermittlung der mindestens einen Umgebungsbedingung auf der Innen- und/oder Außenseite der Gebäudehülle durch Messung oder durch Schätzung. Hierdurch kann abhängig von den vorherrschenden Bedingungen und gewählten Anforderungen zur Ermittlung der einen Umgebungsbedingung auf der Innen- und/oder Außenseite der Gebäudehülle auf eine Messung oder eine Schätzung zurückgegriffen werden. Insbesondere kann die Schätzung auf Basis von zu früheren Zeitpunkten ermittelten Werten und/oder auf Basis von Näherungen erfolgen. Dadurch wird die Flexibilität des Verfahrens erhöht und die Anwendung des Verfahrens erleichtert.

Vorzugsweise wird die Ermittlung der mindestens einen Umgebungsbedingung auf der Innen- und/oder Außenseite und die Ermittlung der Oberflächentemperatur des Anteils der Außenseite der Gebäudehülle bevorzugt mindestens drei Mal wiederholt. Hierbei hängen sowohl die Genauigkeit des Verfahrens als auch die Dauer des Verfahrens von der gewählten Anzahl der Wiederholungen ab. Wird die Anzahl der Wiederholungen auf einen geringen Wert wie beispielsweise drei festgelegt, so kann die Dauer des Verfahrens zur Bestimmung des Wärmedurchgangskoeffizient sowie die Wärmekapazität der Gebäudehülle reduziert werden. Wird die Anzahl der Wiederholungen auf einen höheren Wert wie beispielsweise zehn festgelegt, so kann die Genauigkeit des Verfahrens zur Bestimmung des Wärmedurchgangskoeffizient sowie die Wärmekapazität der Gebäudehülle weiter erhöht werden.

Insbesondere können die Zeitpunkte $t_i$ mehrere Stunden auseinander liegen. Hierdurch können zwischen den mehrere Stunden auseinander liegenden Zeitpunkten $t_i$ weitere Gebäudehüllen untersucht werden. Dadurch kann die Effizienz des Verfahrens weiter erhöht werden.

Vorzugsweise erfolgt die Ermittlung der mindestens einen Umgebungsbedingung auf der Innen- und/oder Außenseite und die Ermittlung der Oberflächentemperatur des Anteils der Außenseite der Gebäudehülle zu mindestens zwei, bevorzugt drei verschiedenen Zeitpunkten $t_i$ nach Sonnenuntergang, insbesondere zu solchen Zeitpunkten, bei denen der Einfluss kurzwelliger Strahlung gering ist, insbesondere nachts. Dadurch kann die Komplexität des Modells und damit die Ermittlung des Wärmedurchgangskoeffizienten sowie der Wärmekapazität der Gebäudehülle reduziert und die Effizienz des Verfahrens weiter gesteigert werden.

Vorzugsweise wird die Ermittlung der mindestens einen Umgebungsbedingung auf der Innen- und/oder Außenseite und die Ermittlung der Oberflächentemperatur des Anteils der Außenseite der Gebäudehülle zu einer Vielzahl von unterschiedlichen Zeitpunkten $t_i$ wiederholt zum Erhalt jeweils einer Zeitreihe der mindestens einen Umgebungsbedingung auf der Innen- und/oder Außenseite und der Oberflächentemperatur des Anteils der Außenseite der Gebäudehülle. Hierdurch kann die Genauigkeit des Verfahrens weiter verbessert werden.

Vorzugsweise wird die Gebäudehülle in dem Modell als ein Netzwerk aus thermischen Widerstandselementen und Kapazitätselementen modelliert, wobei durch die thermischen Widerstandselemente der Transport von Wärme durch die Gebäudehülle und durch die Kapazitätselemente die Speicherung von Wärme in der Gebäudehülle abgebildet werden. Insbesondere wird hierbei die Gebäudehülle als eine eindimensionale Aneinanderreihung von thermischen Widerständen und thermischen Kapazitäten anhand eines Systems von Differentialgleichungen beschrieben. Dadurch kann die eindimensionale Wärmestromdichte durch die Gebäudehülle numerisch, insbesondere näherungsweise ermittelt werden.

Vorzugsweise ergibt sich ein thermisches Widerstandselement aus

$$q = \frac{1}{R_{\mathrm{therm}}A}(T_l - T_r),$$

wobei q die Wärmestromdichte, $R_{therm}$ den Wärmewiderstand des thermischen Widerstandselements, $A$ seine Fläche, $T_l$ die Temperatur auf der linken Seite und $T_r$ die Temperatur auf der rechten Seite des jeweiligen thermischen Widerstandselements bezeichnen.

Vorzugsweise ergibt sich ein thermisches Kapazitätselement aus

$$C\dot{T} = qA,$$

wobei C die Wärmekapazität des thermischen Kapazitätselements, $\dot{T}$ die Ableitung der Temperatur $T$ nach der Zeit, q

die Wärmestromdichte und $A$ die Fläche des thermischen Kapazitätselements bezeichnen.

Vorzugsweise ist die in dem Modell verwendete Anzahl K der thermischen Widerstandselemente drei und die Anzahl L der thermischen Kapazitätselemente zwei. Dabei ist die verwendete Anzahl K, L der thermischen Widerstandselemente und/oder Kapazitätselemente nicht auf drei bzw. zwei beschränkt. Hierbei führt eine geringere Anzahl K, L von Widerstands- bzw. Kapazitätselementen zu einem kleineren Parameterraum, wodurch sich die Dauer des Kalibrierungsprozesses verringert. Andererseits führt eine größere Anzahl K, L von Widerstands- bzw. Kapazitätselementen zu genaueren Beschreibungen der Gebäudehülle und bilden insbesondere schnelle Oberflächeneffekte besser ab, die z.B. durch wechselnde direkte Sonneneinstrahlung auftreten können. Abhängig von den spezifischen Anforderungen und Umgebungsbedingungen kann also die Anzahl K, L der gewählten Elemente festgelegt werden, um entweder die Dauer des Kalibrierungsprozesses zu reduzieren oder die Genauigkeit des Modells der Gebäudehülle zu erhöhen.

Vorzugsweise umfasst das Modell Randbedingungen, wobei die Randbedingen die Umgebungsbedingungen auf der Innenseite und der Außenseite der Gebäudehülle umfassen. Anhand der ermittelten bzw. festgelegten Randbedingungen kann sodann das System der Differentialgleichungen, welches die Gebäudehülle beschreibt gelöst werden.

Vorzugsweise ergibt sich eine Randbedingung des Modells aus einem konvektiven Wärmeaustausch zwischen der Gebäudehülle und der Umgebungsluft und der konvektive Wärmeaustausch ergibt sich aus

$$q_{conv} = h_c(T_{wall} - T_{air}),$$

wobei $h_c$ den konvektiven Wärmeübergangskoeffizienten, $T_{wall}$ die Oberflächentemperatur der Gebäudehülle und $T_{air}$ die Lufttemperatur bezeichnen.

Vorzugsweise ist auf Außenseite der Gebäudehülle der konvektive Wärmeübergangskoeffizient $h_c$ abhängig von den Windverhältnissen. Insbesondere ergibt sich der konvektive Wärmeübergangskoeffizient $h_{c,out}$ an einem Ort ohne Wind oder im Wesentlichen ohne Wind zu

$$h_{c,out} = \frac{Nuk}{L},$$

wobei $k$ die Wärmeleitfähigkeit der Gebäudehülle und $L$ ihre Höhe bezeichnen. Hierbei bezeichnet $Nu$ die Nußelt-Zahl, die von der Oberflächentemperatur der Gebäudehülle $T_{wall}$ und der Lufttemperatur $T_{air}$ abhängt.

Vorzugsweise ergibt sich eine Randbedingung des Modells aus einem Austausch langwelliger Wärmestrahlung zwischen der Gebäudehülle und den umgebenden Objekten und die langwellige Wärmestrahlung ergibt sich aus

$$q_{lw} = \varepsilon\sigma(T_{wall}^4 - T_{surr}^4),$$

wobei $\varepsilon$ den Emissionsgrad der Oberfläche der Gebäudehülle im thermischen Infrarotbereich, wobei $\sigma$ die Stefan-Boltzmann-Konstante, $T_{wall}$ die Oberflächentemperatur der Gebäudehülle und $T_{surr}$ das gewichtete Mittel, insbesondere um die Wichtung und Mittelung der vierten Potenzen der Oberflächentemperaturen der umgebenden Objekte bezeichnen.

Vorzugsweise entspricht das gewichtete Mittel der Oberflächentemperaturen der umgebenden Objekte $T_{surr}$ im Wesentlichen der Lufttemperatur $T_{air}$.

Vorzugsweise ergibt sich eine Randbedingung des Modells aus einer Absorption von kurzwelliger Strahlung durch die Gebäudehülle und die Absorption von kurzwelliger Strahlung ergibt sich aus

$$q_{sw} = \alpha I_{GTI},$$

wobei $\alpha$ den Absorbtionsgrad der Gebäudehülle im kurzwelligen Bereich und $I_{GTI}$ die geneigte globale Sonneneinstrahlung, die auf die Gebäudehülle trifft bezeichnen.

Vorzugsweise wird zur Kalibrierung des Modells die Funktion

$$\chi^2(R,C) = \sum_{i=1}^{N} \left( \frac{T_{\text{wall},i}^{\text{meas}} - T_{\text{wall},i}^{\text{model}}(\mathbf{R},\mathbf{C})}{\sigma_i} \right)^2$$

minimiert, wobei $T_{wall,i}^{meas}$ die ermittelten Oberflächentemperaturen der Gebäudehülle und $T_{wall,i}^{model}$ die durch das Modell geschätzten Oberflächentemperaturen der Gebäudehülle zum Zeitschritt i, $N$ die Anzahl der Zeitschritte, für die die Ermittlung der Oberflächentemperaturen der Gebäudehülle vorgenommen wurde bezeichnen und $\sigma_i$ die geschätzte Unsicherheit, insbesondere die statistische Messunsicherheit der ermittelten Oberflächentemperatur zum Zeitschritt i, R einen Vektor, der die Widerstandswerte der Widerstandselemente und C einen Vektor, der die Kapazitätswerte der Kapazitätselemente bezeichnen.

Vorzugsweise wird die Güte der Kalibrierung des Modells ermittelt aus dem reduzierten Chi-Quadrat der Funktion $\chi^2$ gemäß

$$\chi_r^2 = \frac{\chi^2}{N - n_p},$$

wobei $n_p$ die Anzahl der angepassten Parameter bezeichnen.

Vorzugsweise erfolgt die Ermittlung des Wärmedurchgangskoeffizienten und der Wärmekapazität der Gebäudehülle anhand des kalibrierten Modells durch numerische Lösung des kalibrierten Modells.

Die erfindungsgemäße Vorrichtung zur Bestimmung des Wärmedurchgangskoeffizienten und der Wärmekapazität einer Gebäudehülle umfasst eine Wärmebildkamera zum Erfassen eines Wärmebildes auf einer Außenseite der Gebäudehülle und eine Recheneinheit, die ausgebildet ist das erfindungsgemäße Verfahren durchzuführen. Vorzugsweise ist die Wärmebildkamera ausgebildet eine Strahlung im Infrarotbereich, insbesondere innerhalb des Wellenlängenbereichs von 7,5 $\mu$m bis 14 $\mu$m zu empfangen. Somit kann eine schnelle und ortsaufgelöste Ermittlung des Wärmedurchgangskoeffizienten und der Wärmekapazität der Gebäudehülle durchgeführt werden, wobei die dynamischen Veränderungen der Gebäudehülle und der Umgebung der Gebäudehülle berücksichtigt werden zur Steigerung der Genauigkeit der Ermittelten Werte.

Vorzugsweise ist die Wärmebildkamera stationär oder bewegbar, insbesondere auf einem stationären oder einem bewegbaren Träger auf der Außenseite der Gebäudehülle angeordnet. Hierdurch kann abhängig von der spezifischen Anforderung die Wärmebildkamera stationär oder bewegbar angeordnet werden. Insbesondere kann es sich bei dem bewegbaren Träger um ein Stativ, eine Drohne, einen Hubschrauber oder ein Flugzeug handeln. Dadurch wird die Flexibilität der Vorrichtung bezüglich unterschiedlicher Anwendungsfälle gesteigert. Wird beispielsweise nur eine Gebäudehülle oder eine geringe Anzahl benachbarter Gebäudehüllen vermessen, so kann die Wärmebildkamera stationär auf der Außenseite der jeweiligen Gebäudehülle angeordnet werden. Wird beispielsweise eine größere Anzahl von Gebäudehüllen vermessen, insbesondere eine Vielzahl von Gebäudehüllen mehrerer Straßenzüge, so kann die Wärmebildkamera auf einem bewegbaren Träger angeordnet werden, so dass die mehreren Straßenzüge jeweils mehrmals an einem Tag vermessen werden können.

Vorzugsweise umfasst die Vorrichtung Sensoren zur Erfassung von mindestens einer Umgebungsbedingung auf der Innen- und/oder Außenseite der Gebäudehülle.

Vorzugsweise umfassen die Sensoren zur Erfassung der mindestens einen Umgebungsbedingung der Gebäudehülle: Sensoren zur Erfassung einer Lufttemperatur auf einer Innenseite der Gebäudehülle und/oder einer Außenseite der Gebäudehülle, Sensoren zur Erfassung einer Windgeschwindigkeit auf einer Außenfläche der Gebäudehülle, Sensoren zur Erfassung einer direkten und/oder diffusen Sonneneinstrahlung auf einer Außenfläche der Gebäudehülle. Dadurch können solche Umgebungsbedingungen durch Sensoren gemessen werden, die einen Einfluss auf die Ermittlung der Oberflächentemperatur der Gebäudehülle haben, wodurch eine Berücksichtigung der dynamischen Zustände der Gebäudehülle und seiner Umgebung stattfindet.

Vorzugsweise wird die Lufttemperatur auf der Innenseite der Gebäudehülle ohne einen Sensor, insbesondere durch Schätzung ermittelt. Hierdurch kann auf eine Messung auf der Innenseite der Gebäudehülle verzichtet werden. Dadurch wird eine Beeinträchtigung der Nutzung des Gebäudes während der Erfassung der Umgebungsbedingungen der Gebäudehülle vermieden.

Vorzugsweise sind die Sensoren zur Erfassung der mindestens einen Umgebungsbedingung auf der Innen- und/oder Außenseite der Gebäudehülle an einem Standort vor der Gebäudehülle stationär angeordnet oder auf einem Träger, insbesondere einem bewegbaren Träger der Wärmebildkamera angeordnet. Hierdurch lässt sich eine berührungslose Ermittlung der durch die Sensoren erfassten Umgebungsbedingung durchführen. Dadurch entfällt das Anbringen von Sensoren an der Gebäudehülle, wodurch sich die Ermittlung der Umgebungsbedingungen vereinfachen lässt. Ferner wird hierdurch ermöglicht, dass zwischen den Wiederholungen der Ermittlung der Oberflächentemperatur der Gebäudehülle sowie der mindestens einen Umgebungsbedingung der Messaufbau für andere Gebäudehüllen verwendet werden kann. Hierdurch wird die Benutzbarkeit der Vorrichtung verbessert und seine Effizienz gesteigert.

Vorzugsweise ist zur Ermittlung der thermischen Strahlung, die von der Umgebung auf die Gebäudehülle fällt, die Wärmebildkamera ausgebildet die Strahlungstemperatur auf einem Reflektor mit einem vordefinierten Reflexionsgrad, insbesondere einem Reflexionsgrad mit einem Wert von 1, zu messen, wobei der Reflektor bei der Messung parallel zur Gebäudehülle angeordnet ist. Hierdurch kann die reflektierte Umgebungsstrahlung von der Strahlung, die die Wärmebildkamera misst, subtrahiert werden, um die emittierte Strahlung und daraus die Oberflächentemperatur zu bestimmen. Dadurch erfolgt eine Korrektur der ermittelten Oberflächentemperatur um die die ermittelte Umgebungsstrahlung.

Vorzugsweise ist der Reflektor auf der Außenseite der Gebäudehülle stationär angeordnet oder an einem Standort vor der Gebäudehülle stationär angeordnet oder auf einem Träger, insbesondere einem bewegbaren Träger der Wärmebildkamera angeordnet.

Vorzugsweise ist zur Ermittlung der thermischen Strahlung, die von der Umgebung auf die Gebäudehülle fällt, ein Pyrgeometer vorgesehen, wobei die Messrichtung des Pyrgeometers parallel zur Gebäudehülle angeordnet ist. Hierdurch kann die reflektierte Umgebungsstrahlung von der Strahlung, die die Wärmebildkamera misst, subtrahiert werden, um die emittierte Strahlung und daraus die Oberflächentemperatur zu bestimmen. Dadurch erfolgt eine Korrektur der ermittelten Oberflächentemperatur um die die ermittelte Umgebungsstrahlung.

Vorzugsweise ist das Pyrgeometer auf der Außenseite der Gebäudehülle stationär angeordnet oder an einem Standort vor der Gebäudehülle stationär angeordnet oder auf einem Träger, insbesondere einem bewegbaren Träger der Wärmebildkamera angeordnet.

Nachfolgend wird die Erfindung anhand bevorzugter Ausführungsform unter Bezugnahme der beigefügten Zeichnungen näher erläutert.

Es zeigen:

Fig. 1 eine Ausführungsform des erfindungsgemäßen Verfahrens;

Fig. 2 eine schematische Darstellung einer Modellierung der Gebäudehülle als ein Netzwerk aus thermischen Widerstandselementen und thermischen Kapazitätselementen gemäß einer Ausführungsform des erfindungsgemäßen Verfahrens;

Fig. 3 eine schematische Darstellung der Umgebungsbedingungen der Gebäudehülle gemäß einer Ausführungsform des erfindungsgemäßen Verfahrens; und

Fig. 4 ein Diagramm der über einen bestimmten Zeitraum durch ein erfasstes Wärmebild ermittelten Oberflächentemperaturen und der durch das kalibrierte Modell ermittelten Oberflächentemperaturen der Gebäudehülle gemäß einer Ausführungsform des erfindungsgemäßen Verfahrens.

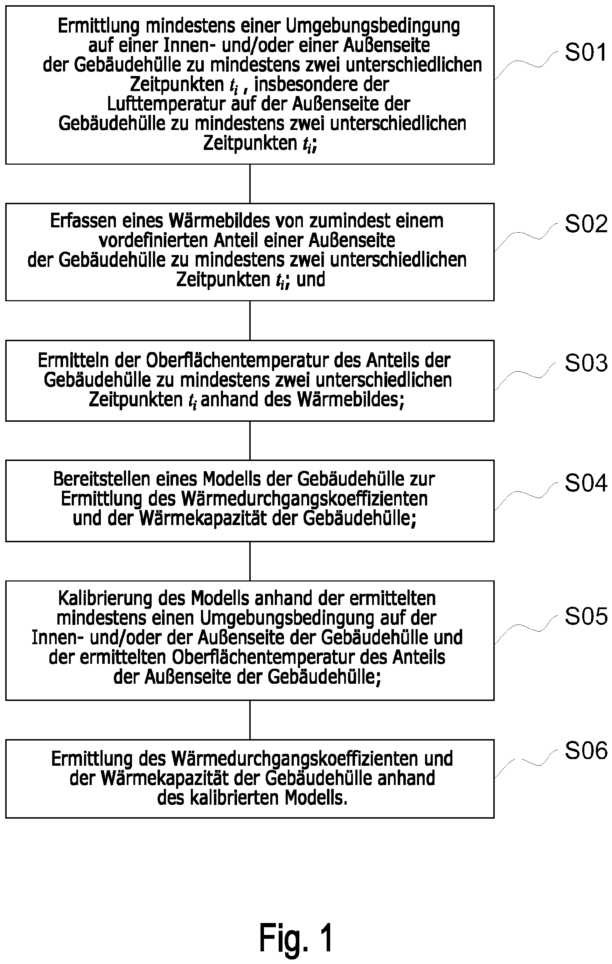

Bei einer Ausführung des erfindungsgemäßen Verfahrens gezeigt in Fig. 1 weist das Verfahren folgende Schritte auf:

Schritt S01: Ermittlung mindestens einer Umgebungsbedingung auf einer Innen- und/oder Außenseite der Gebäudehülle zu mindestens zwei unterschiedlichen Zeitpunkten $t_i$, insbesondere der Lufttemperatur auf der Außenseite der Gebäudehülle zu mindestens zwei unterschiedlichen Zeitpunkten $t_i$;

Schritt S02: Erfassen eines Wärmebildes von zumindest einem vorgegebenen Anteil einer Außenseite der Gebäudehülle zu mindestens zwei unterschiedlichen Zeitpunkten $t_i$;

Schritt S03: Ermitteln der Oberflächentemperatur des Anteils der Außenseite der Gebäudehülle zu mindestens zwei unterschiedlichen Zeitpunkten $t_i$ anhand des Wärmebildes;

Schritt S04: Bereitstellen eines Modells der Gebäudehülle zur Ermittlung des Wärmedurchgangskoeffizienten und der Wärmekapazität der Gebäudehülle;

Schritt S05: Kalibrierung des Modells anhand der ermittelten mindestens einen Umgebungsbedingung auf der Innen- und/oder der Außenseite der Gebäudehülle und der ermittelten Oberflächentemperatur des Anteils der Außenseite der Gebäudehülle;

Schritt S06: Ermittlung des Wärmedurchgangskoeffizienten und der Wärmekapazität der Gebäudehülle anhand des kalibrierten Modells.

Auch wenn die Schritte des Verfahrens in der Figur 1 als konsekutive Schritte dargestellt sind, ist die vorliegende Erfindung weder auf die dargestellte zeitliche Abfolge der Schritte noch deren Reihenfolge beschränkt, so dass einzelne Schritte gleichzeitig mit anderen Schritten ausgeführt werden können oder die Reihenfolge entsprechend angepasst werden kann.

In Schritt S01 wird mindestens eine Umgebungsbedingung auf der Innen- und/oder der Außenseite der Gebäudehülle zu mindestens zwei unterschiedlichen Zeitpunkten $t_i$, ermittelt.

Beispielsweise handelt es sich bei den ermittelten Umgebungsbedingungen auf der Innen- und/oder einer Außenseite der Gebäudehülle um eine physikalische Größe, die im Zusammenhang mit Prozessen zur Wärmeübertragung bzw. mit Mechanismen zur Übertragung von thermischer Energie auf die Gebäudehülle stehen. Beispielsweise handelt es sich bei den Umgebungsbedingungen um die Lufttemperatur auf der Außen- und/oder auf der Innenseite der Gebäudehülle zu mindestens zwei unterschiedlichen Zeitpunkten $t_i$ und bei dem Prozess zur Wärmeübertragung auf die Gebäudehülle um einen konvektiven Wärmeaustausch zwischen der Gebäudehülle und der Umgebungsluft.

Zusätzlich oder alternativ kann es sich bei den ermittelten Umgebungsbedingungen auf der Innen- und/oder der Außenseite der Gebäudehülle beispielsweise um die Windgeschwindigkeit in der Nähe eines vorgegebenen Anteils der Außenseite der Gebäudehülle bzw. deren äußerer Oberfläche zu mindestens zwei unterschiedlichen Zeitpunkten $t_i$ und/oder um die direkte wie auch die diffuse Sonneneinstrahlung auf dem vorgegebenen Anteil der Außenseite der Gebäudehülle bzw. deren äußerer Oberfläche zu mindestens zwei unterschiedlichen Zeitpunkten $t_i$ handeln.

Insbesondere kann dabei die Ermittlung der mindestens einen Umgebungsbedingung auf der Innen- und/oder Außenseite der Gebäudehülle durch Messung oder durch Schätzung erfolgen.

In Schritt S02 wird ein Wärmebild von zumindest einem vorgegebenen Anteil einer Außenseite der Gebäudehülle zu mindestens zwei unterschiedlichen Zeitpunkten $t_i$ erfasst.

In Schritt S03 wird sodann anhand des in Schritt S02 erfassten Wärmebildes die Oberflächentemperatur des vorgegebenen Anteils der Außenseite der Gebäudehülle zu mindestens zwei unterschiedlichen Zeitpunkten $t_i$ ermittelt.

Gemäß einer bevorzugten Ausführungsform des erfindungsgemäßen Verfahrens werden die obigen Schritte S01, S02 und S03 jeweils N-mal zu weiteren Zeitpunkten $t_{i=1,...,N}$ wiederholt zum Erhalt jeweils einer Zeitreihe der mindestens einen Umgebungsbedingung auf der Innen- und/oder Außenseite und der Oberflächentemperatur des Anteils der Außenseite der Gebäudehülle. Hierbei können die die Zeitschritte i beispielsweise wenige Minuten oder aber auch mehrere Stunden auseinander liegen.

Im Schritt S04 wird ein Modell der Gebäudehülle bereitgestellt zur Ermittlung des Wärmedurchgangskoeffizienten und der Wärmekapazität.

Beispielsweise wird die Gebäudehülle in dem Modell als eine eindimensionale Aneinanderreihung aus thermischen Widerstandselementen und Kapazitätselementen modelliert. Dabei wird durch die thermischen Widerstandselemente der Transport von Wärme durch die Gebäudehülle und durch die Kapazitätselemente die Speicherung von Wärme in der Gebäudehülle modelliert. Insbesondere ist das Modell ausgebildet eine Schätzung des Wärmedurchgangskoeffizienten und/oder des Wärmekapazität der Gebäudehülle anhand der thermischen Widerstandselemente und Kapazitätselementen zu ermitteln.

Ferner kann das Modell der Gebäudehülle neben thermischen Widerstandselementen und thermischen Kapazitätselementen beispielsweise Randbedingungen umfassen, die die Umgebungsbedingungen auf der Innenseite und der Außenseite der Gebäudehülle abbilden. Beispielsweise kann es sich bei einer Randbedingung um den konvektiven Wärmeaustausch zwischen der Gebäudehülle und der Umgebungsluft, also der Luft auf der Innenseite und der Luft auf der Außenseite der Gebäudehülle handeln. Bei einer weiteren Randbedingung kann es sich beispielsweise um den Austausch von langwelliger Wärmestrahlung zwischen der Gebäudehülle und den die Gebäudehülle auf der Innen- und/oder Außenseite umgebenden Oberflächen handeln. Bei einer anderen Randbedingung handelt es sich beispielsweise um die Absorption kurzwelliger Strahlung, insbesondere der von der Sonne emittierten kurzwelligen Strahlung.

Im Schritt S05 wird das Modell anhand der im Schritt S01 ermittelten mindestens einen Umgebungsbedingung auf der Innen- und/oder der Außenseite der Gebäudehülle und der im Schritt S03 ermittelten Oberflächentemperatur des Anteils der Außenseite der Gebäudehülle kalibriert. Im Schritt S05 wird das Modell der Gebäudehülle also anhand der ermittelten Umgebungsbedingung und der ermittelten Oberflächentemperatur der Gebäudehülle angepasst bzw. geeicht.

Im Schritt S06 wird der Wärmedurchgangskoeffizient und die Wärmekapazität der Gebäudehülle anhand des kalibrierten Modells ermittelt. Beispielsweise werden hierzu zunächst die thermischen Widerstands- und Kapazitätselemente im Rahmen der im Schritt S05 durchgeführten Modellkalibrierung ermittelt. Insbesondere wird anhand des kalibrierten Modells der Gesamtwärmewiderstand $R_{tot}$ der Gebäudehülle ermittelt. Aus dem Gesamtwärmewiderstand wird sodann der Wärmedurchgangskoeffizient ermittelt. Ferner wird anhand des kalibrierten Modells die Wärmekapazität der Gebäudehülle ermittelt.

Durch die Kalibrierung des Modells anhand der ermittelten Umgebungsbedingung und der ermittelten Oberflächentemperatur der Gebäudehülle lassen sich also die unbekannten Parameter des Modells, nämlich die Werte der thermischen Widerstandselemente und thermischen Kapazitätselemente ermitteln. Aus den thermischen Widerstandselementen kann der Gesamtwärmewiderstand $R_{tot}$ ermittelt werden und aus diesem sodann der Wärmedurchgangskoeffizient. Ferner kann aus den aus dem kalibrierten Modell ermittelten thermischen Kapazitätselementen die Wärmekapazität der Gebäudehülle ermitteln.

Beispielsweise wird zur Kalibrierung des Modells die Zielfunktion

$$\chi^2(R,C) = \sum_{i=1}^{N} \left( \frac{T_{\text{wall},i}^{\text{meas}} - T_{\text{wall},i}^{\text{model}}(\mathbf{R},\mathbf{C})}{\sigma_i} \right)^2$$

minimiert, wobei $T_{wall,i}^{meas}$ die ermittelten Oberflächentemperaturen der Gebäudehülle und $T_{wall,i}^{model}$ die durch das Modell geschätzten Oberflächentemperaturen der Gebäudehülle zum Zeitschritt i, $N$ die Anzahl der Zeitschritte, für die die Ermittlung der Oberflächentemperaturen der Gebäudehülle vorgenommen wurde bezeichnen und $\sigma_i$ die geschätzte Unsicherheit, insbesondere die statistische Messunsicherheit der ermittelten Oberflächentemperatur zum Zeitschritt i, $R$ einen Vektor, der die Widerstandswerte der Widerstandselemente und $C$ einen Vektor, der die Kapazitätswerte der Kapazitätselemente bezeichnen.

Hierbei wird die Güte der Kalibrierung des Modells beispielsweise ermittelt aus dem reduzierten Chi-Quadrat der Zielfunktion $\chi^2$ gemäß

$$\chi_r^2 = \frac{\chi^2}{N - n_p},$$

wobei $n_p$ die Anzahl der angepassten Parameter bezeichnen.

Dabei kann die Ermittlung des Wärmedurchgangskoeffizienten und der Wärmekapazität der Gebäudehülle anhand des kalibrierten Modells beispielsweise durch numerische Lösung des kalibrierten Modells erfolgen.

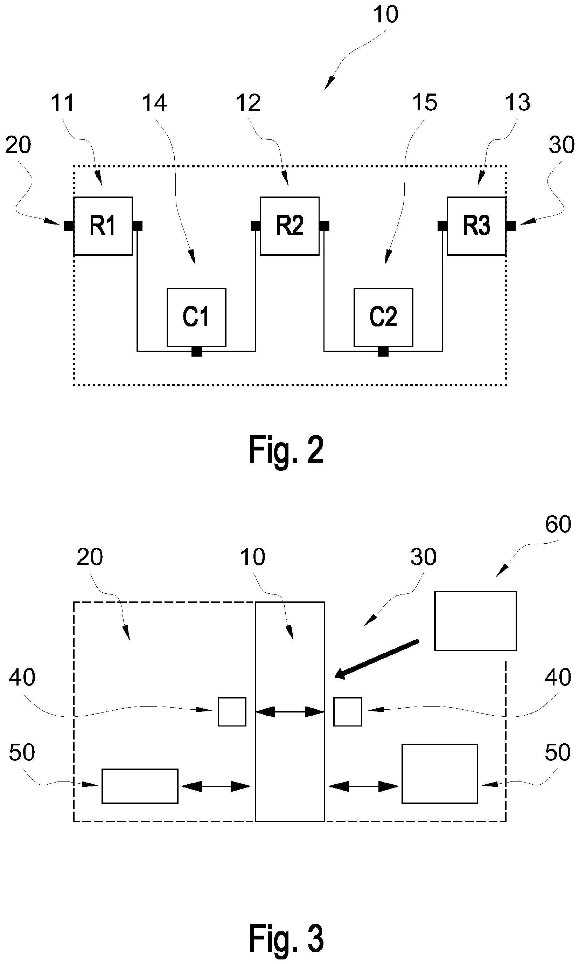

Eine schematische Darstellung eines Modells der Gebäudehülle 10 mit einem Netzwerk bzw. einer eindimensionalen Aneinanderreihung aus drei thermischen Widerstandselementen 11, 12, 13 (R1, R2, R3) und zwei thermischen Kapazitätselementen 14, 15 (C1, C2) gemäß einer Ausführungsform des erfindungsgemäßen Verfahrens wird in der Fig. 2 gezeigt.

Wie in der Fig. 2 zu sehen ist weist die Gebäudehülle 10 eine in Richtung der Innenseite 20 der Gebäudehülle 10 orientierte erste Seite auf sowie eine in Richtung der Außenseite 30 der Gebäudehülle 10 orientierte zweite Seite auf. Dabei ist das ein erstes äußeres Widerstandselement 11 (R1) in der Nähe der ersten, zur Innenseite 20 orientierten Seite angeordnet.

Ein zweites äußeres Widerstandselement 13 (R3) ist in der Nähe der zweiten, zur Außenseite 30 orientierten Seite der Gebäudehülle 10 angeordnet.

Ferner ist ein inneres Widerstandselement 12 (R2) zwischen den beiden äußeren Widerstandselementen 11, 13 angeordnet. Zudem ist ein erstes thermisches Kapazitätselement 14 (C1) zwischen dem ersten äußeren Widerstandselement 11 (R1) und dem inneren Widerstandselement 12 (R2) angeordnet und ein zweites thermisches Kapazitätselement 15 (C2) zwischen dem inneren Widerstandselement 12 (R2) und dem zweiten äußeren Widerstandselement 13 (R3) angeordnet. In dem in der Fig. 2 gezeigten Beispiel beträgt die Anzahl der thermischen Widerstandselemente 11, 12, 13 drei und die Anzahl der thermischen Kapazitätselemente 14, 15 zwei. Jedoch ist das Modell nicht auf diese Anzahl von Widerstands- und Kapazitätselementen beschränkt und kann auch eine höhere oder niedrigere Anzahl Widerstands- und/oder Kapazitätselemente umfassen. Dabei führt eine geringere Anzahl von Widerstands- und/oder Kapazitätselementen zu einem kleineren Parameterraum, wodurch sich die Dauer des Kalibrierungsprozesses verringert. Durch eine größere Anzahl von Widerstands- und/oder Kapazitätselementen können beispielweise Heterogenitäten der Gebäudehülle genauer abgebildet werden. Ferner können durch eine größere Anzahl von Widerstands- und/oder Kapazitätselementen schnelle Oberflächeneffekte bzw. sich zeitlich schnell verändernde Prozesse in der Nähe der Oberflächen auf der Innen- und/oder Außenseite der Gebäudehülle 10, die z.B. durch wechselnde direkte Sonneneinstrahlung auftreten können genauer abgebildet werden.

Vorzugsweise ergibt sich ein thermisches Widerstandselement aus

$$q = \frac{1}{R_{\mathrm{therm}}A}(T_l - T_r),$$

wobei q die Wärmestromdichte, $R_{therm}$ den Wärmewiderstand des thermischen Widerstandselements, A seine Fläche, $T_l$ die Temperatur auf der linken Seite und $T_r$ die Temperatur auf der rechten Seite des jeweiligen thermischen Widerstandselements bezeichnen.

Vorzugsweise ergibt sich ein thermisches Kapazitätselement aus

$$C\dot{T} = qA,$$

wobei C die Wärmekapazität des thermischen Kapazitätselements, $\dot{T}$ die Ableitung der Temperatur T nach der Zeit, q die Wärmestromdichte und A die Fläche des thermischen Kapazitätselements bezeichnen.

Im Falle einer im Wesentlichen symmetrischen Gebäudehülle können zusätzlich oder alternativ hierzu die Wärmewiderstände $R_{therm}$ des ersten und zweiten äußeren Widerstandselements 11, 13 und des inneren Widerstandselements 12 gleich gesetzt werden. Analog können die Wärmekapazitäten C der beiden Kapazitätselemente 14, 15 gleich gesetzt werden. Hierdurch lässt sich der Parameterraum des Modells weiter reduzieren, wodurch sich die Kalibrierung des Modells beschleunigen lässt.

Die Umgebungsbedingungen auf der Innenseite 20 und der der Außenseite 30 der Gebäudehülle 10 werden in Fig. 3 schematisch gemäß einer Ausführungsform des erfindungsgemäßen Verfahrens dargestellt.

Zwischen der Gebäudehülle 10 und der die Gebäudehülle 10 auf der Innenseite 20 und der Außenseite 30 umgebenden Luft 40 findet ein konvektiver Wärmeaustausch statt. Eine der Randbedingungen des Modells wird durch diesen konvektiven Wärmeaustausch zwischen der Gebäudehülle 10 und der Umgebungsluft 40 bestimmt. Dabei ergibt sich der konvektive Wärmeaustausch 40 zwischen der Gebäudehülle 10 und der Umgebungsluft aus

$$q_{conv} = h_c(T_{wall} - T_{air}),$$

wobei $h_c$ den konvektiven Wärmeübergangskoeffizienten, $T_{wall}$ die Oberflächentemperatur der Gebäudehülle 10 und $T_{air}$ die Lufttemperatur bezeichnen.

Auf der Außenseite 30 der Gebäudehülle 10 ist der konvektive Wärmeübergangskoeffizient $h_c$ beispielsweise abhängig von den herrschenden Windverhältnissen. Insbesondere kann der konvektive Wärmeübergangskoeffizient $h_{c,out}$ an einem Ort ohne Wind oder fast keinem Wind ermittelt werden aus

$$h_{c,out} = \frac{Nuk}{L},$$

wobei k die Wärmeleitfähigkeit der Gebäudehülle 10 und L ihre Höhe bezeichnen. Hierbei bezeichnet Nu die Nußelt-Zahl, die von der Oberflächentemperatur $T_{wall}$ der Gebäudehülle 10 und der Lufttemperatur $T_{air}$ abhängt.

Wie ferner in der Fig. 3 zu sehen kann zwischen der Gebäudehülle 10 und der die Gebäudehülle 10 auf der Innenseite 20 und der Außenseite 30 umgebenden Objekte bzw. Oberflächen 50 findet ein Austausch langwelliger Wärmestrahlung stattfinden. Durch diesen Austausch langwelliger Wärmestrahlung zwischen der Gebäudehülle 10 und den umgebenden Objekten 50 wird eine weitere Randbedingung des Modells bestimmt. Dabei ergibt sich der Austausch langwelliger Strahlung zwischen der Gebäudehülle 10 und den umgebenden Objekten bzw. Oberflächen 50 aus

$$q_{lw} = \varepsilon\sigma(T_{wall}^4 - T_{surr}^4),$$

wobei $\varepsilon$ den Emissionsgrad der Oberfläche der Gebäudehülle 10 im thermischen Infrarotbereich, wobei $\sigma$ die Stefan-

Boltzmann-Konstante, $T_{wall}$ die Oberflächentemperatur der Gebäudehülle 10 und $T_{surr}$ das gewichtete Mittel, insbesondere die Wichtung und Mittelung der vierten Potenz der Oberflächentemperaturen der umgebenden Objekte 50 bezeichnen.

Insbesondere entspricht das gewichtete Mittel der Oberflächentemperaturen der umgebenden Objekte $T_{surr}$ im Wesentlichen der Lufttemperatur $T_{air}$.

Wie ferner in der Fig. 3 zu sehen, findet Absorption kurzwelliger Strahlung durch die Gebäudehülle 10 statt, welche von der Sonne 60 emittiert wird. Durch diese Absorption der kurzwelligen Sonnenstrahlung durch die Gebäudehülle 10 wird eine weitere Randbedingung des Modells bestimmt. Die Absorption von kurzwelliger Strahlung ergibt aus

$$q_{sw} = \alpha I_{GTI},$$

wobei $\alpha$ den Absorbtionsgrad der Gebäudehülle 10 im kurzwelligen Bereich und $I_{GTI}$ die geneigte globale Sonneneinstrahlung, die auf die Gebäudehülle trifft bezeichnen.

Zur Ermittlung des Wärmedurchgangskoeffizienten und der Wärmekapazität der Gebäudehülle durch numerische Lösung des kalibrierten Modells werden insbesondere die obigen Randbedingungen festgelegt. Hierzu werden insbesondere die Innen- und Außenlufttemperatur sowie die globale geneigte Sonneneinstrahlung $I_{GTI}$ ermittelt. Die Ermittlung der Innen- und Außenlufttemperatur sowie der globalen geneigten Sonneneinstrahlung $I_{GTI}$ kann beispielsweise durch Messung oder Schätzung erfolgen.

Beispielsweise ergibt sich für die in der Fig. 2 gezeigte Ausführungsform der vorliegenden Erfindung mit dem Netzwerk bzw. der eindimensionalen Aneinanderreihung aus drei thermischen Widerstandselementen 11, 12, 13 (R1, R2, R3) und zwei thermischen Kapazitätselementen 14, 15 (C1, C2), ein thermisches Widerstandselement für eine im Wesentlichen symmetrischen Gebäudehülle aus:

$$q_{R_i} = \frac{1}{R_i A}\left(T_{l,i} - T_{r,i}\right) \qquad (1)$$

Dabei bezeichnen $q_{Ri}$ die Wärmestromdichte, $R_i$ den Wärmewiderstand des jeweiligen thermischen Widerstandselements, $A$ seine Fläche, $T_{l,i}$ die Temperatur auf der linken Seite und $T_{r,i}$ die Temperatur auf der rechten Seite des jeweiligen thermischen Widerstandselements 11, 12, 13 (R1, R2, R3), wobei i = 1, 2, 3 gilt.

Hierbei ergeben sich die thermischen Kapazitätselemente aus:

$$C_i \dot{T}_{C_i} = q_{C_i} A, \qquad (2)$$

wobei $C_i$ die Wärmekapazität des jeweiligen thermischen Kapazitätselements, $\dot{T}$ die Ableitung der Temperatur $T$ nach der Zeit, $q_{Ci}$ die Wärmestromdichte und $A$ die Fläche des jeweiligen thermischen Kapazitätselements 14, 15 (C1, C2) bezeichnen und i = 1, 2 gilt.

Dabei werden die Wärmestromdichten $q_{Ri}$ positiv gezählt, wenn sie von links nach rechts fließen und die Wärmestromdichten $q_{Ci}$ werden positiv gezählt, wenn sie in das jeweilige thermische Kapazitätselement hineinfließen.

Die in der Fig. 2 gezeigten Verbindungslinien zwischen den thermischen Widerstands- und thermischen Kapazitätselementen stellen die Temperatur und Wärmeflusswerte zwischen den jeweiligen Elementen dar. Beispielsweise ergeben sich die die Temperatur und Wärmestromdichten zwischen den jeweiligen Elementen zu:

$$T_{r,1} = T_{C_1} = T_{l,2} \qquad (3)$$

$$T_{r,2} = T_{C_2} = T_{l,3} \qquad (4)$$

$$q_{R_1} - q_{C_1} = q_{R_2} \qquad (5)$$

$$q_{R_2} - q_{C_2} = q_{R_3} \qquad (6)$$

Hieraus ergeben sich die folgenden zwei gekoppelten Differentialgleichungen:

$$C_1 \dot{T}_{C_1} = \frac{1}{R_1} \left( T_{l,1} - T_{C_1} \right) - \frac{1}{R_2} \left( T_{C_1} - T_{C_2} \right), \qquad (7)$$

$$C_2 \dot{T}_{C_2} = \frac{1}{R_2} \left( T_{C_1} - T_{C_2} \right) - \frac{1}{R_3} \left( T_{C_2} - T_{r,2} \right). \qquad (8)$$

Die Differentialgleichungen (7), (8) werden anhand der ermittelten Umgebungsbedingung sowie anhand des ermittelten Wärmeaustauschs zwischen der Gebäudehülle und der Umgebung gelöst.

Beispielsweise wird im Folgenden die Umgebungsbedingung in Form von Absorption von kurzwelliger Sonnenstrahlung vernachlässigt.

Ferner wird im Folgenden beispielsweise die Umgebungsbedingung in Form des Austauschs von langwelliger Wärmestrahlung mit der Umgebung entweder vernachlässigt oder im Rahmen einer Taylor-Entwicklung als linear angenähert. Hierdurch werden der Strahlungsaustausch und der konvektive Wärmeaustausch mit nur einem Term, insbesondere mit einem effektiven linearen Term beschrieben.

Dadurch ergibt sich die Wärmestromdichte zwischen der Gebäudehülle und der inneren und äußeren Umgebung zu:

$$q_{\text{air}-\text{wall}}^{\text{in}} = \frac{h_{\text{c, eff}}^{\text{in}}}{A} \left( T_{\text{air, in}}^{\text{eff}} - T_{l,1} \right), \qquad (9)$$

$$q_{\text{air}-\text{wall}}^{\text{out}} = \frac{h_{\text{c, eff}}^{\text{out}}}{A} \left( T_{r,3} - T_{\text{air, out}}^{\text{eff}} \right). \qquad (10)$$

Ferner gilt in diesem Fall:

$$q_{R_1/R_3} = q_{\text{air}-\text{wall}}^{\text{in/out}}. \qquad (11)$$

Werden nun ausgehend von der Gleichung (11), die Gleichungen (9) und (10) in die Gleichungen (7) und (8) eingesetzt, ergeben sich die folgenden Differentialgleichungen:

$$C_1 \dot{T}_{C_1} = \frac{h_{\text{c, eff}}^{in}}{1 + R_1 h_{\text{c, eff}}^{\text{in}}} \left( T_{\text{air, in}}^{\text{eff}} - T_{C_1} \right) - \frac{1}{R_2} \left( T_{C_1} - T_{C_2} \right), \qquad (12)$$

$$C_2 \dot{T}_{C_2} = \frac{1}{R_2} \left( T_{C_1} - T_{C_2} \right) - \frac{h_{\text{c,eff}}^{out}}{1 + R_1 h_{\text{c, eff}}^{\text{out}}} \left( T_{C_2} - T_{\text{air, out}}^{\text{eff}} \right). \qquad (13)$$

Zur Lösung der Gleichungen (12) und (13) kann beispielsweise die Zeit diskretisiert werden. Beispielsweise lässt sich hierbei die Ableitung nach der Zeit durch Anwendung eines Operators wie folgt darstellen:

$$S = \frac{2(1 - Z^{-1})}{\tau(1 + Z^{-1})}. \qquad (14)$$

Dabei gibt der Operator 1 den Wert einer Größe zum aktuellen Zeitpunkt und $Z^{-1}$ den Wert zum vorherigen Zeitschritt an. Hierbei entspricht $\tau$ der Länge der Intervalle zwischen den jeweiligen Zeitschritten. Mit der Temperatur $T^p$ zum aktuellen Zeitschritt und der Temperatur $T^{p-1}$ zum vorangegangenen Zeitschritt, ergeben sich die folgenden Koeffizienten:

$$R'_1 = \frac{h^{in}_{c,\,eff}}{1 + R_1 h^{in}_{c,\,eff}},$$

$$R'_3 = \frac{h^{out}_{c,eff}}{1 + R_1 h^{out}_{c,\,eff}},$$

$$a_{11} = \frac{2}{\tau}C_1 + \frac{1}{R'_1} + \frac{1}{R_2},$$

$$a_{12} = -\frac{1}{R_2},$$

$$a_{13} = \left(\frac{2}{\tau}C_1 - \frac{1}{R'_1} - \frac{1}{R_2}\right)T^{p-1}_{C_1} + \frac{1}{R_2}T^{p-1}_{C_2} + \frac{T^{eff,p}_{air,\,in} - +T^{eff,p-1}_{air,\,in}}{R'_1},$$

$$a_{21} = -\frac{1}{R_2},$$

$$a_{22} = \frac{2}{\tau}C_2 + \frac{1}{R_2} + \frac{1}{R'_3},$$

$$a_{23} = \frac{1}{R_2}T^{p-1}_{C_1} + \left(\frac{2}{\tau}C_2 - \frac{1}{R_2} - \frac{1}{R'_3}\right)T^{p-1}_{C_2} + \frac{T^{eff,p}_{air,\,out} - +T^{eff,p-1}_{air,\,out}}{R'_3},$$

wobei sich die Temperaturen $T^p_{C1}$ und $T^p_{C2}$ der jeweiligen thermischen Kapazitätselemente zu einem Zeitschritt p ergeben zu:

$$T^p_{C_1} = \frac{a_{13} - a_{12}T^p_{C_1}}{a_{11}}, \quad T^p_{C_2} = \frac{a_{11}a_{23} - a_{21}a_{13}}{a_{22}a_{11} - a_{21}a_{12}}. \qquad (15)$$

Ausgehend von den Temperaturen $T^p_{C1}$ und $T^p_{C2}$ der jeweiligen thermischen Kapazitätselemente 14, 15 (C1, C2) zu einem Zeitpunkt p, lassen sich damit die Temperaturen zu jedem beliebigen anderen Zeitpunkt ermitteln. Aus den Temperaturen der Kapazitätselemente lassen sich wiederum auch sämtliche anderen unbekannten Größen, wie die übrigen Temperaturen und die Wärmeflüsse ermitteln. Mithilfe der Gleichungen (1), (10) und (11) lässt sich sodann beispielsweise die Temperatur. $T_{r,3}$ bestimmen, welche der Oberflächentemperatur an der Außenseite der Gebäudehülle entspricht.

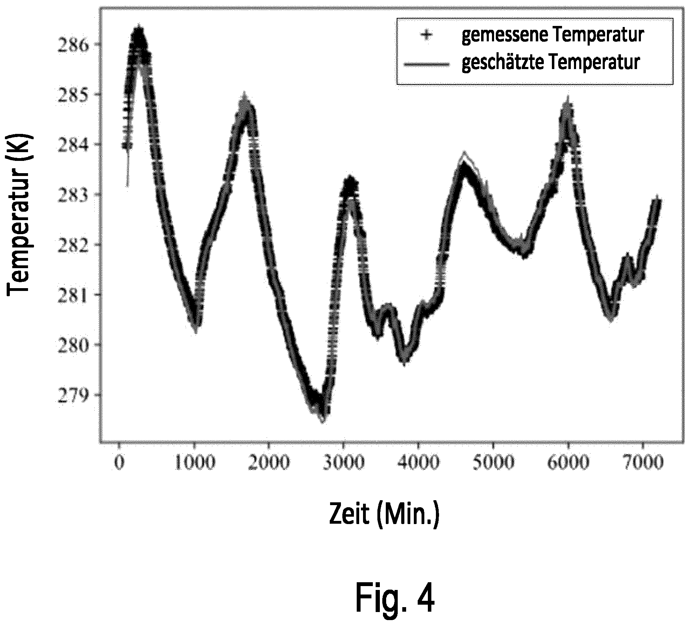

Fig. 4 zeigt ein Diagramm der über einen bestimmten Zeitraum durch ein erfasstes Wärmebild ermittelten Oberflächentemperaturen $T^{meas}_{wall,i}$ und der durch das kalibrierte Modell ermittelten Oberflächentemperaturen $T^{model}_{wall,i}$ der Gebäudehülle 10 gemäß einer Ausführungsform des erfindungsgemäßen Verfahrens.

In dem in der Fig. 4 gezeigten Diagramm sind über einen Zeitraum von fünf Tagen jeweils ein Wärmebild pro Minute erfasst worden und eine entsprechender Wert für die Oberflächentemperatur $T^{meas}_{wall,i}$ der Gebäudehülle 10 ermittelt worden. In dem gleichen Diagramm wurden die durch das kalibrierte Modell ermittelten Oberflächentempera- turen $T^{model}_{wall,i}$ der Gebäudehülle 10 aufgetragen. Wie in der Fig. 4 zu sehen, zeigen die tatsächlich ermittelten Ober- flächentemperaturen $T^{meas}_{wall,i}$ der Gebäudehülle 10 und die durch das kalibrierte Modell ermittelten Oberflächentempe- raturen $T^{model}_{wall,i}$ im Wesentlichen den gleichen Kurvenverlauf mit geringen Abweichungen.

Somit werden ein Verfahren und eine Vorrichtung geschaffen, welche eine schnelle, berührungslose und/oder ortsaufgelöste Bestimmung des Wärmedurchgangskoeffizienten und der Wärmekapazität einer Gebäudehülle unter Berücksichtigung dynamischer Veränderungen der Umgebungsbedingungen sowie etwaiger Inhomogenitäten bzw. Heterogenitäten der Gebäudehülle erlauben.


**Patentansprüche**

1. Verfahren zur Bestimmung des Wärmedurchgangskoeffizienten und der Wärmekapazität einer Gebäudehülle umfassend die folgenden Schritte:

   a) Ermittlung mindestens einer Umgebungsbedingung auf einer Innen- und/oder einer Außenseite der Gebäudehülle zu mindestens zwei unterschiedlichen Zeitpunkten $t_i$, insbesondere der Lufttemperatur auf der Außenseite der Gebäudehülle zu mindestens zwei unterschiedlichen Zeitpunkten $t_i$;
   b) Erfassen eines Wärmebildes von zumindest einem vorgegebenen Anteil einer Außenseite der Gebäudehülle zu mindestens zwei unterschiedlichen Zeitpunkten $t_i$; und
   c) Ermitteln der Oberflächentemperatur des Anteils der Außenseite der Gebäudehülle zu mindestens zwei unterschiedlichen Zeitpunkten $t_i$ anhand des Wärmebildes;
   d) Bereitstellen eines Modells der Gebäudehülle zur Ermittlung des Wärmedurchgangskoeffizienten und der Wärmekapazität der Gebäudehülle;
   e) Kalibrierung des Modells anhand der ermittelten mindestens einen Umgebungsbedingung auf der Innen- und/oder der Außenseite der Gebäudehülle und der ermittelten Oberflächentemperatur des Anteils der Außenseite der Gebäudehülle;
   f) Ermittlung des Wärmedurchgangskoeffizienten und der Wärmekapazität der Gebäudehülle anhand des kalibrierten Modells.

2. Verfahren nach Anspruch 1, wobei die Ermittlung der mindestens einen Umgebungsbedingung auf der Innen- und/oder Außenseite der Gebäudehülle durch Messung oder durch Schätzung erfolgt.

3. Verfahren nach einem der vorhergehenden Ansprüche, wobei die Gebäudehülle in dem Modell als ein Netzwerk aus thermischen Widerstandselementen und Kapazitätselementen modelliert wird, wobei durch die thermischen Widerstandselemente der Transport von Wärme durch die Gebäudehülle und durch die Kapazitätselemente die Speicherung von Wärme in der Gebäudehülle abgebildet werden.

4. Verfahren nach Anspruch 3, wobei sich ein thermisches Widerstandselement ergibt aus

$$q = \frac{1}{R_{\text{therm}}A}(T_l - T_r),$$

wobei q die Wärmestromdichte, $R_{therm}$ den Wärmewiderstand des thermischen Widerstandselements, $A$ seine Fläche, $T_l$ die Temperatur auf der linken Seite und $T_r$ die Temperatur auf der rechten Seite des jeweiligen thermischen Widerstandselements bezeichnen.

5. Verfahren nach einem der Ansprüche 3 bis 4, wobei sich ein thermisches Kapazitätselement ergibt aus

$$C\dot{T} = qA,$$

wobei C die Wärmekapazität des thermischen Kapazitätselements, $\dot{T}$ die Ableitung der Temperatur $T$ nach der Zeit, q die Wärmestromdichte und $A$ die Fläche des thermischen Kapazitätselements bezeichnen.

6. Verfahren nach einem der Ansprüche 1 bis 5, wobei das Modell Randbedingungen umfasst, wobei die Randbedingen die Umgebungsbedingungen auf der Innenseite und der Außenseite der Gebäudehülle umfassen.

7. Verfahren nach Anspruch 6, wobei eine Randbedingung des Modells sich aus einem konvektiven Wärmeaustausch zwischen der Gebäudehülle und der Umgebungsluft ergibt und sich der konvektive Wärmeaustausch ergibt aus

$$q_{conv} = h_c(T_{wall} - T_{air}),$$

wobei $h_c$ den konvektiven Wärmeübergangskoeffizienten, $T_{wall}$ die Oberflächentemperatur der Gebäudehülle und $T_{air}$ die Lufttemperatur bezeichnen.

8. Verfahren nach Anspruch 6, wobei eine Randbedingung des Modells sich aus einem Austausch langwelliger Wärmestrahlung zwischen der Gebäudehülle und den umgebenden Objekten ergibt und sich die langwellige Wärmestrahlung ergibt aus

$$q_{lw} = \varepsilon\sigma(T_{wall}^4 - T_{surr}^4),$$

wobei $\varepsilon$ den Emissionsgrad der Oberfläche der Gebäudehülle im thermischen Infrarotbereich, wobei $\sigma$ die Stefan-Boltzmann-Konstante, $T_{wall}$ die Oberflächentemperatur der Gebäudehülle und $T_{surr}$ das gewichtete Mittel, insbesondere um die gewichtete und gemittelte vierte Potenz der Oberflächentemperaturen der umgebenden Objekte bezeichnen.

9. Verfahren nach Anspruch 6, wobei eine Randbedingung des Modells sich aus einer Absorption von kurzwelliger Strahlung durch die Gebäudehülle ergibt und sich die Absorption von kurzwelliger Strahlung ergibt aus

$$q_{sw} = \alpha I_{GTI},$$

wobei $\alpha$ den Absorbtionsgrad der Gebäudehülle im kurzwelligen Bereich und $I_{GTI}$ die geneigte globale Sonneneinstrahlung, die auf die Gebäudehülle trifft bezeichnen.

**10.** Verfahren nach einem der Ansprüche 1 bis 9, wobei zur Kalibrierung des Modells die Funktion

$$\chi^2(R,C) = \sum_{i=1}^{N} \left( \frac{T_{\text{wall},i}^{\text{meas}} - T_{\text{wall},i}^{\text{model}}(\mathbf{R},\mathbf{C})}{\sigma_i} \right)^2$$

minimiert, wobei $T_{wall,i}^{meas}$ die ermittelten Oberflächentemperaturen der Gebäudehülle und $T_{wall,i}^{model}$ die durch das Modell geschätzten Oberflächentemperaturen der Gebäudehülle zum Zeitschritt i, $N$ die Anzahl der Zeitschritte, für die die Ermittlung der Oberflächentemperaturen der Gebäudehülle vorgenommen wurde bezeichnen und $\sigma_i$ die geschätzte Unsicherheit, insbesondere die statistische Messunsicherheit der ermittelten Oberflächentemperatur zum Zeitschritt i, R einen Vektor, der die Widerstandswerte der Widerstandselemente und C einen Vektor, der die Kapazitätswerte der Kapazitätselemente bezeichnen.

**11.** Vorrichtung zur Bestimmung des Wärmedurchgangskoeffizienten und der Wärmekapazität einer Gebäudehülle umfassend eine Wärmebildkamera zum Erfassen eines Wärmebildes auf einer Außenseite der Gebäudehülle und eine Recheneinheit ausgebildet das Verfahren gemäß der Ansprüche 1 - 10 durchzuführen.

**12.** Vorrichtung nach Anspruch 11, wobei die Wärmebildkamera stationär oder bewegbar, insbesondere auf einem stationären oder einem bewegbaren Träger, auf der Außenseite der Gebäudehülle angeordnet ist.

**13.** Vorrichtung nach einem der Ansprüche 11 oder 12, wobei die Vorrichtung Sensoren zur Erfassung von mindestens einer Umgebungsbedingung auf der Innen- und/oder Außenseite der Gebäudehülle umfasst, wobei insbesondere die Sensoren zur Erfassung der mindestens einen Umgebungsbedingung der Gebäudehülle umfassen: Sensoren zur Erfassung einer Lufttemperatur auf einer Innenseite der Gebäudehülle und/oder einer Außenseite Gebäudehülle, Sensoren zur Erfassung einer Windgeschwindigkeit auf einer Außenfläche der Gebäudehülle, Sensoren zur Erfassung einer direkten und/oder diffusen Sonneneinstrahlung auf einer Außenfläche der Gebäudehülle, wobei insbesondere die Sensoren zur Erfassung der mindestens einen Umgebungsbedingung auf der Innen- und/oder Außenseite der Gebäudehülle an einem Standort vor der Gebäudehülle stationär angeordnet sind oder auf einem Träger, insbesondere einem bewegbaren Träger der Wärmebildkamera angeordnet sind.

**14.** Vorrichtung nach einem der Ansprüche 11 bis 13, wobei zur Ermittlung der thermischen Strahlung, die von der Umgebung auf die Gebäudehülle fällt, die Wärmebildkamera ausgebildet ist die Strahlungstemperatur auf einem Reflektor mit einem vordefinierten Reflexionsgrad, insbesondere einem Reflexionsgrad von 1, zu messen, wobei der Reflektor insbesondere auf der Außenseite der Gebäudehülle stationär angeordnet ist oder an einem Standort vor der Gebäudehülle stationär angeordnet ist oder auf einem Träger angeordnet ist, wobei der Reflektor bei der Messung parallel zur Gebäudehülle angeordnet ist.

**15.** Vorrichtung nach einem der Ansprüche 11 bis 13, wobei zur Ermittlung der thermischen Strahlung, die von der Umgebung auf die Gebäudehülle fällt, ein Pyrgeometer vorgesehen ist, wobei das Pyrgeometer auf der Außenseite der Gebäudehülle stationär angeordnet ist oder an einem Standort vor der Gebäudehülle stationär angeordnet ist oder auf einem Träger angeordnet ist und die Messrichtung des Pyrgeometers parallel zur Gebäudehülle angeordnet ist.

Ermittlung mindestens einer Umgebungsbedingung auf einer Innen- und/oder einer Außenseite der Gebäudehülle zu mindestens zwei unterschiedlichen Zeitpunkten $t_i$ , insbesondere der Lufttemperatur auf der Außenseite der Gebäudehülle zu mindestens zwei unterschiedlichen Zeitpunkten $t_i$;

S01

Erfassen eines Wärmebildes von zumindest einem vordefinierten Anteil einer Außenseite der Gebäudehülle zu mindestens zwei unterschiedlichen Zeitpunkten $t_i$; und

S02

Ermitteln der Oberflächentemperatur des Anteils der Gebäudehülle zu mindestens zwei unterschiedlichen Zeitpunkten $t_i$ anhand des Wärmebildes;

S03

Bereitstellen eines Modells der Gebäudehülle zur Ermittlung des Wärmedurchgangskoeffizienten und der Wärmekapazität der Gebäudehülle;

S04

Kalibrierung des Modells anhand der ermittelten mindestens einen Umgebungsbedingung auf der Innen- und/oder der Außenseite der Gebäudehülle und der ermittelten Oberflächentemperatur des Anteils der Außenseite der Gebäudehülle;

S05

Ermittlung des Wärmedurchgangskoeffizienten und der Wärmekapazität der Gebäudehülle anhand des kalibrierten Modells.

S06

Fig. 1

Fig. 2

Fig. 3

Fig. 4

Europäisches
Patentamt

European
Patent Office

Office européen
des brevets

# EUROPÄISCHER RECHERCHENBERICHT

**Nummer der Anmeldung**

EP 24 15 9418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 218096 A1 (DEUTSCH ZENTR LUFT & RAUMFAHRT [DE]) 23. April 2020 (2020-04-23) * Zusammenfassung * * Absätze [0001], [0007], [0010] - [0012], [0014] - [0016], [0018] - [0025], [0028] - [0030], [0032], [0037] - [0038], [0041] * ----- | 1-15 | INV. G01K17/20 |
| A | WO 2011/128927 A2 (GRINZATO ERMANNO [IT]) 20. Oktober 2011 (2011-10-20) * Zusammenfassung * * das ganze Dokument * ----- | 1-15 | |

**RECHERCHIERTE SACHGEBIETE (IPC)**

G01K

Der vorliegende Recherchenbericht wurde für alle Patentansprüche erstellt

| Recherchenort | Abschlußdatum der Recherche | Prüfer |
|---|---|---|
| Den Haag | 12. Juli 2024 | Bagnera, Carlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 9418

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2024

| Im Recherchenbericht angeführtes Patentdokument | Datum der Veröffentlichung | Mitglied(er) der Patentfamilie | Datum der Veröffentlichung |
|---|---|---|---|
| DE 102018218096 A1 | 23-04-2020 | DE 102018218096 A1<br>EP 3870946 A1<br>WO 2020083667 A1 | 23-04-2020<br>01-09-2021<br>30-04-2020 |
| WO 2011128927 A2 | 20-10-2011 | KEINE | |

EPO FORM P0461

Für nähere Einzelheiten zu diesem Anhang : siehe Amtsblatt des Europäischen Patentamts, Nr.12/82